# EUROPEAN PATENT SPECIFICATION

(11) **EP 3 411 977 B1**
(45) Date of publication and mention of the grant of the patent: **01.01.2020**
(21) Application number: 17703131.7
(22) Date of filing: 03.02.2017
(51) Int. Cl.: H04L 1/18, H04L 1/16

(54) **METHODS AND DEVICES FOR RECEIPT STATUS REPORTING**
VERFAHREN UND VORRICHTUNGEN ZUR EMPFANGSSTATUSMELDUNG
PROCÉDÉS ET DISPOSITIFS D'ENVOI DE RAPPORTS D'ÉTAT DE RÉCEPTION

(30) Priority: 05.02.2016 US 201661291686 P
(43) Date of publication of application: 12.12.2018
(73) Proprietor: Telefonaktiebolaget LM Ericsson (PUBL), 164 83 Stockholm (SE)
(72) Inventor: DUDDA, Torsten, 52076 AACHEN (DE); MÄÄTTANEN, Helka-Liina, FI-00510 Helsinki (FI); BERGSTRÖM, Mattias, 192 70 Sollentuna (SE)
(74) Representative: Ericsson
(86) International application number: PCT/EP2017/052332
(87) International publication number: WO 2017/134196

(56) References cited:
- WO-A1-2013/048049
- US-A1- 2013 034 014
- SAMSUNG: "Miscellaneous Corrections", 3GPP DRAFT; R1-111446 CR TS36213 MISCELLANEOUS UPDATES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Barcelona, Spain; 20110509, 3 May 2011 (2011-05-03), XP050491133, [retrieved on 2011-05-03]

## Description

### [Field]

The present application relates to the field of systems in which data units are sent from a sending device to a receiving device and in which the receiving device periodically sends receipt status reports to the sending device.

### [Background]

It is known to provide for the possibility of a data unit receiver to be configured to periodically send receipt status reports to the data unit sender. For example, in the context of so-called LTE-WLAN Aggregation, it has been proposed to be able to configure a User Equipment (UE) to send PDCP (Packet Data Convergence Protocol) status PDUs, which can also be referred to as control PDUs, periodically.

Document US 2013/0034014 A1 discloses techniques for signaling radio link control (RLC) status reports from a mobile terminal to a wireless network. These status reports are sent at a rate which is determined based on throughput estimates of data transmissions to the mobile terminal and on timer values received from the network.

### [Summary]

The object of the invention is to provide an improved concept for sending receipt status reports.

According to an embodiment, a method of receipt status reporting in a communication device is proposed comprising configuring said communication device for periodic receipt status reporting by associating a first status report type with a value of a first reporting periodicity parameter and associating a second status report type with a value of second reporting periodicity parameter, said first status report type being different from said second status report type and said first reporting periodicity parameter being different from said second reporting periodicity parameter. The method furthermore comprises periodically sending receipt status reports of said first type according to said associated value of said first reporting periodicity parameter and receipt status reports of said second type according to said associated value of said second reporting periodicity parameter.

According to a further embodiment, a method of operating a node of a communication network is proposed, comprising providing to a communication device of said communication network a configuration information element comprising information for associating a first status report type with a value of a first reporting periodicity parameter and associating a second status report type with a value of second reporting periodicity parameter, said first status report type being different from said second status report type and said first reporting periodicity parameter being different from said second reporting periodicity parameter.

According to a further embodiment a communication device is proposed that is arranged for receiving data units and being configurable for periodic receipt status reporting by associating a first status report type with a value of a first reporting periodicity parameter and associating a second status report type with a value of second reporting periodicity parameter, said first status report type being different from said second status report type and said first reporting periodicity parameter being different from said second reporting periodicity parameter. The communication device is furthermore arranged for periodically sending receipt status reports of said first type according to said associated value of said first reporting periodicity parameter and receipt status reports of said second type according to said associated value of said second reporting periodicity parameter.

According to a further embodiment a node of a communication network is proposed, said node being arranged for providing to a communication device of said communication network a configuration information element comprising information for associating a first status report type with a value of a first reporting periodicity parameter and associating a second status report type with a value of second reporting periodicity parameter, said first status report type being different from said second status report type and said first reporting periodicity parameter being different from said second reporting periodicity parameter.

### [Brief description of the drawings]

Fig. 1 shows a schematic representation of two communication devices embodying concepts of the present disclosure;
Fig. 2 shows an example of protocol architecture of LTE-WLAN aggregation.

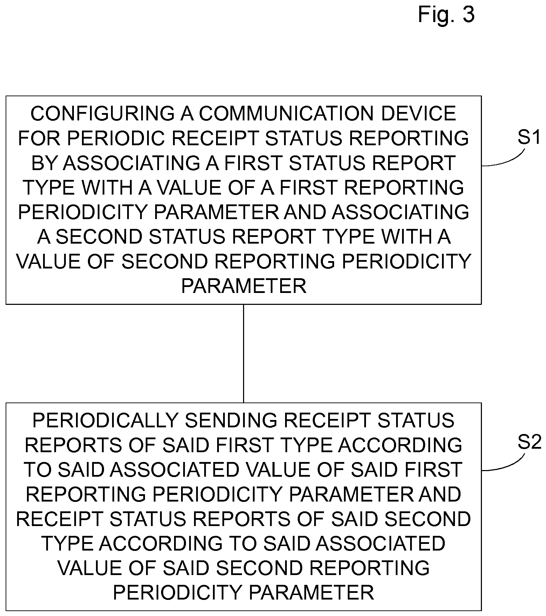

Fig. 3 shows a first embodiment of method steps according to the present disclosure.

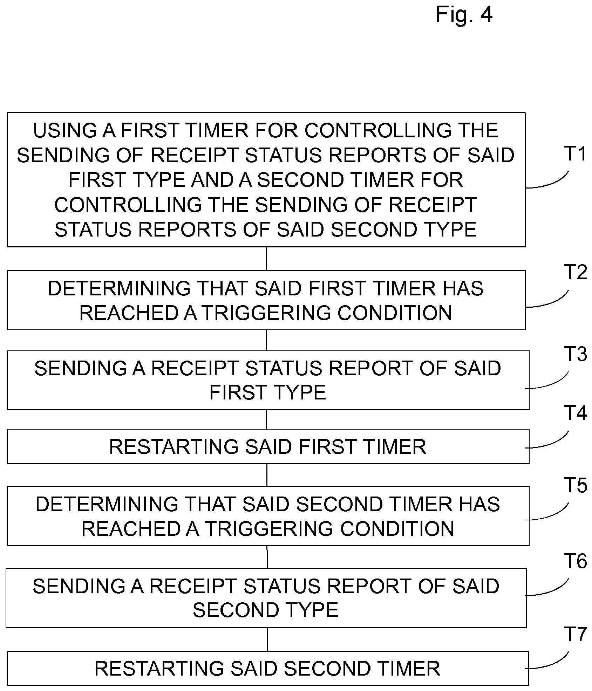

Fig. 4 shows a second embodiment of method steps according to the present disclosure.

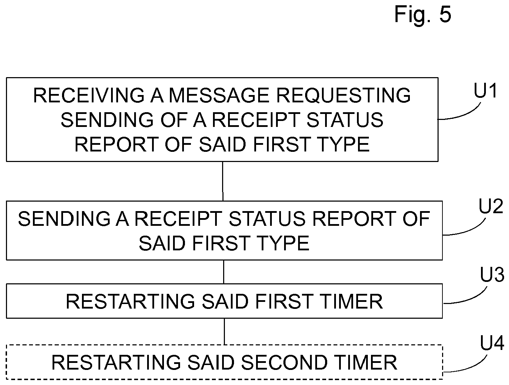

Fig. 5 shows a third embodiment of method steps according to the present disclosure.

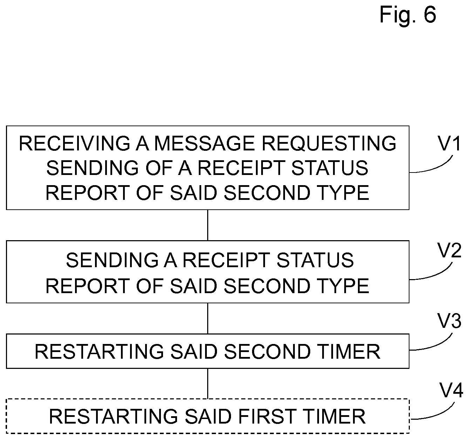

Fig. 6 shows a fourth embodiment of method steps according to the present disclosure.

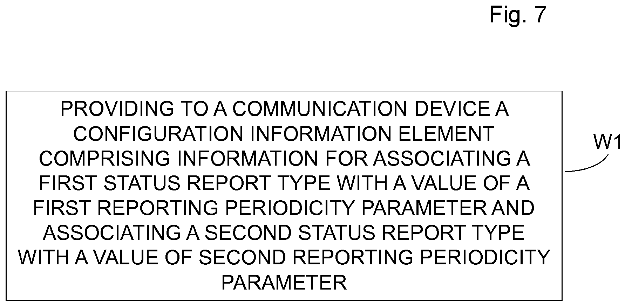

Fig. 7 shows a fifth embodiment of a method step according to the present disclosure.

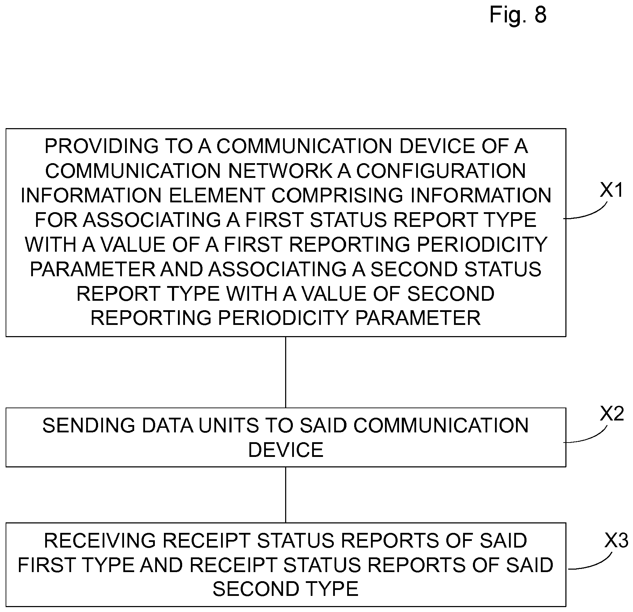

Fig. 8 shows a sixth embodiment of method steps according to the present disclosure.

### [Detailed description]

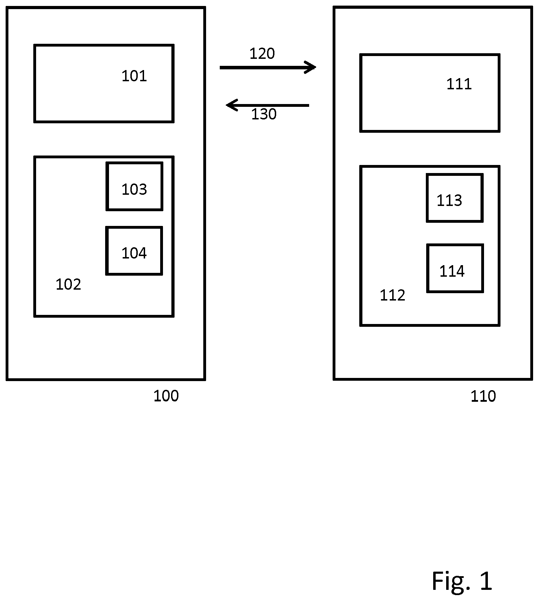

Fig. 1 shows a system comprising a communication device 100 arranged for sending data units 120, e.g. Protocol Data Units (PDUs) associated with a predetermined communication protocol, e.g. PDCP, to a further communication device 110 arranged for receiving the data units 120.

Communication device 100 may be comprised in a network node of a communication network or may be such a node, e.g. an access node of a wireless communication system, like a base station. According to an embodiment, device 100 is comprised in an eNodeB. Device 100 comprises an interface 101, e.g. adapted for wireless transmission and reception, and a control part 102, which in turn may comprise a processor 103 and a memory 104.

Communication device 110 may be a part of the same communication network, e.g. mobile station of a wireless communication system. According to an embodiment, device 110 is a User Equipment (UE) of a wireless communication system, e.g. LTE. Device 110 comprises an interface 111, e.g. adapted for wireless transmission and reception, and a control part 112, which in turn may comprise a processor 113 and a memory 114.

According to an embodiment, communication device 110 is arranged for receiving the data units 120 and configurable for periodic receipt status reporting, i.e. sending receipt status reports 130 that provide information on the receipt status of the sent data units 120. For example, sequence numbers (SN) may be used for distinguishing individual data units, and the receipt status reports may provide information on the receipt status using such SNs. The receipt status information may be chosen in any suitable or desirable way, e.g. distinguish states such as "received" or "missing".

At least a first type of receipt status report and a second type receipt status report are provided. In the following, only two types of status reports will be referred to, but the invention is not limited to two and can also be applied in the case of more than two types of status report. According to the embodiment, device 110 is configurable for periodic receipt status reporting by associating a first status report type with a value of a first reporting periodicity parameter and associating a second status report type with a value of second reporting periodicity parameter. The first status report type is different from said second status report type and the first reporting periodicity parameter is different from the second reporting periodicity parameter.

The configuration of device 110 can be done in any suitable or desirable way, e.g. by providing to communication device 110 a configuration information element comprising information for associating a first status report type with a value of a first reporting periodicity parameter and associating a second status report type with a value of second reporting periodicity parameter, said first status report type being different from said second status report type and said first reporting periodicity parameter being different from said second reporting periodicity parameter. Such a configuration information element can e.g. be provided from device 100 to device 110 some time prior to starting the sending of data units 120. However, it could also be provided by some other source within or outside of the communication network of the devices 100 and 110.

Preferably, in response to being configured, and when receiving data units 120, the device 110 then periodically sends receipt status reports of the first type according to said associated value of said first reporting periodicity parameter and receipt status reports of said second type according to said associated value of said second reporting periodicity parameter.

The reporting periodicity parameter can be chosen in any suitable or desirable way. For example, it can be chosen to express a time period, e.g. indicated in milliseconds, said time period indicating the time interval between consecutive transmissions of the corresponding receipt status reports. However, the reporting periodicity can equally well be chosen to express a frequency, e.g. indicated in 1/s, said frequency indicating the frequency of repetition of the corresponding receipt status reports.

In accordance with the embodiment, instead of allowing choosing only one type of receipt status report and then sending the chosen type at a given periodicity, the described concept allows sending two different types of receipt status report in parallel, each with their own respective periodicity. This provides a significant increase in flexibility and introduces a further degree of freedom for operation.

For example, the first status report type may be associated with a first report size and the second status report type may be associated with a second report size, the first report size being larger than the second report size. In other words, the first report type may comprise more status information than the second report type. According to the embodiment, it becomes possible to set the associated value of the first reporting periodicity parameter larger than the associated value of the second reporting periodicity parameter, i.e. the large amount of status information per report, which is important for transmission control of data units 120 from time to time but consumes significant transmission resources, is sent less frequently than the smaller amount of status information per report, which might often be completely sufficient for proper transmission control of the data units 120 being sent, thereby achieving a good balance between reporting efficiency and resource consumption.

As an example, the receipt status report of the first type may comprise an indication of a first missing PDU, the first missing PDU being the PDU with lowest Sequence Number that is missing, and a bitmap indicating further missing PDUs between the first missing PDU and a received PDU with the highest sequence number. The receipt status report of the second type may also comprise an indication of the first missing PDU, but not the bitmap.

It is noted that although the first reporting periodicity parameter is different (i.e. independent of) from said second reporting periodicity parameter, the values configured for the two periodicities can be the same. However, if the values are configured to be different, one advantageous embodiment comprises choosing the value of the first reporting periodicity parameter as an integer multiple of the value of the second reporting periodicity parameter, as this allows for reduced signaling.

The operation of controlling the periodic transmission of the receipt status reports can be performed in any suitable or desirable way. For example, it may comprise using a first timer for controlling the sending of receipt status reports of the first type and a second timer for controlling the sending of receipt status reports of the second type. The two timers could be started simultaneously after configuration, but according to a preferred embodiment, the first timer and said second timer are initially started with a predetermined offset. The offset is preferably chosen such that the triggering of the sending of the first type receipt status report does not coincide with the triggering of the second type receipt status report. The offset may be preset, or it can equally be part of the configuration operation of the device 110, e.g. performed with the configuration information element sent by device 100. As an example, if the value configured for the first reporting periodicity is 200 ms and the value configured for the second reporting periodicity is 50 ms, the offset may e.g. be configured to 25 ms.

The control operation may be such that it comprises:
- determining that said first timer has reached a triggering condition (e.g. when the timer has expired),
- sending a receipt status report of said first type, and
- restarting said first timer.

The control operation may furthermore be such that it comprises:
- determining that said second timer has reached a triggering condition (e.g. when the timer has expired),
- sending a receipt status report of said second type, and
- restarting said second timer.

According to another embodiment, the device 110 may be arranged to receive messages requesting sending of a receipt status report, e.g. a polling request. Such messages requesting sending of a receipt status report can e.g. be sent by device 100.

The control operation may then furthermore be such that it comprises:
- receiving a message requesting sending of a receipt status report of said first type,
- sending a receipt status report of said first type, and
- restarting said first timer. The control operation may be such that only the first timer is restarted, but it is also possible that both the first and the second timer are restarted. If both timers are to be restarted, one is preferably restarted with a predetermined offset with respect to the other. This offset can be chosen to be the same as described above for the initial start, or it can be chosen to be different. Preferably, an offset is configured (e.g. by an information element sent from device 100 to device 110), and the same offset is used for the initial start of both timers and for the restarting of both timers.

The control operation may furthermore be such that it comprises:
- receiving a message requesting sending of a receipt status report of said second type,
- sending a receipt status report of said second type, and
- restarting said second timer. The control operation may be such that only the second timer is restarted, but it is also possible that both the first and the second timer are restarted. If both timers are to be restarted, one is preferably restarted with a predetermined offset with respect to the other. This offset can be chosen to be the same as described above for the initial start, or it can be chosen to be different. Preferably, an offset is configured (e.g. by an information element sent from device 100 to device 110), and the same offset is used for the initial start of both timers and for the restarting of both timers.

As described above, the presently described concept allows sending two different kinds of receipt status reports in parallel, each with an independently configurable periodicity. In order to more efficiently use the transmission resources, the operation may be controlled in such a way that it comprises sending only one of the first and the second type receipt status reports within a predetermined time period from one another. For example, this time period may be a transmission timing interval (TTI), such that the method comprises sending only one of the first and the second type receipt status reports within the same transmission timing interval. However, the time period can also be set longer, e.g. a plurality of TTIs.

The presently described concepts may also be embodied as a computer program product comprising program code to be executed by a processor (e.g. processor 113) of a communication device like device 110 to perform a method according to any of the above described method embodiments.

The presently described concepts may also be embodied as a computer program product comprising program code to be executed by a processor (e.g. processor 103) of a communication network node like device 100 to perform a method according to any of the above described method embodiments.

In the following, further examples of the above described concepts will be described in a more detailed context. This only serves to better illustrate the concepts, but is not intended to be limiting.

The present examples will be described within the context of integration of LTE and WLAN. It should, however, be understood that the problems and solutions described herein are equally applicable to wireless access networks and user equipments (UEs) implementing other access technologies and standards. LTE and WLAN are used as example technologies where the invention is suitable, and using LTE and WLAN in the description therefore is particularly useful for understanding the problem and solutions solving the problem.

LTE- WLAN aggregation (LWA) is a feature wherein the UE may receive and transmit using links to both eNB and WLAN. This feature is described by 3GPP in Release 13 as part of [RP-150510], revised in [RP-151114]. There are different architecture options for LTE-WLAN aggregation. In the split bearer architecture option, denoted also by option 3C, data is split in the PDCP layer. For the downlink direction, this split is done in the eNB. The eNB may dynamically decide how to route PDCP PDUs to the UE - either to the UE directly using LTE RLC, LTE MAC, and LTE PHY, or via a backhaul channel to WLAN and then to the UE using 802.11 MAC and 802.11 PHY.

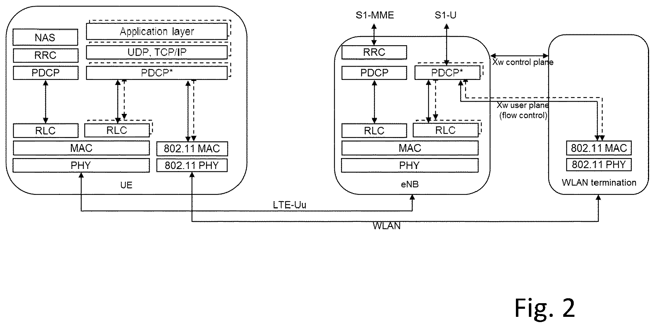

Figure 2 shows the envisaged protocol architecture for LTE-WLAN aggregation. The WLAN termination (WT) point in the network may be implemented by an WLAN access point (AP) and/or access controller (AC) or a further network node. The interface protocol between eNB and WT is denoted Xw.

A current working assumption in 3GPP RAN2 is to introduce a new PDCP status report format, which may be used periodically or based on polling by the eNB. With the PDCP status reporting, generally, the UE informs the eNB about PDCP reception status in the UE.

The legacy report contains a field for first missing sequence (FMS) number which is set to the first missing PDCP SDU and a bitmap field of length in bits equal to the number of PDCP SNs from and not including the first missing PDCP SDU up to and including the last out-of-sequence PDCP SDUs, rounded up to the next multiple of 8. In the following it is explained how FMS and bitmap can be used by the eNB:
**FMS:** With the FMS field the eNB knows how much data is in flight, i.e. in transmission and in reordering processes between eNB and UE PDCP. This information is useful so that the eNB limits its transmissions and does not bring more than ½ PDCP SN space in flight. Furthermore, an average PDCP reception rate can be estimated by comparing how the FMS fields progresses between subsequent reports. Since also the RLC (LTE) reception rate is known in the eNB (based on RLC feedback), the eNB can estimate a WLAN reception rate as well. Similarly the eNB can estimate the data in flight on WLAN link (= data sent - FMS +1 - data sent but not received via LTE RLC). Both these information pieces may be useful for the eNB for flow control and multipath scheduling (LTE or WLAN) of PDCP data.
**The bitmap:** Already with only knowing FMS, after a handover in LTE single connectivity, the eNB was able to do PDCP retransmissions (of all data between highest SN sent and FMS). Some of the data may have already been received by the UE however, due to RLC out of order delivery after handover. For that the bitmap was introduced: it indicates exactly which SN is still outstanding and which SN is already received. Selective retransmissions are enabled by the bitmap. If also in LWA selective retransmissions on PDCP level are considered, the bitmap is useful (or a list of missing SNs below a highest out of order received SN, but this could lead to higher overhead than the bitmap). These selective PDCP retransmissions can be done e.g. when a PDU was lost on WLAN. Recovering this gap by LTE PDCP can improve the end-user performance. It may be up to eNB implementation if such retransmissions are done. The maximum size of the bitmap is ½ of the SN space. For 15 bit SN the maximum size is thus 2KB. For a Cat5 UE with a maximum theoretical UL rate of 75376 bit / TTI, this would lead to an overhead of 21% within this TTI, which is quite considerable, thus frequency feedback including the bitmap is preferably be avoided.

With the method outlined in the present document it is possible to configure a UE with two different PDCP status reporting formats for periodic reporting. Reporting based on the different formats can have different periodicities and time-offsets to start the periodic reporting. This enables the eNB to receive a detailed PDCP status report less frequently, which avoids uplink overhead, but still a less-detailed PDCP status report very frequently. The detailed PDCP status report may use the legacy PDCP status report format, and the frequent PDPC status report may use a new format, e.g. only including FMS.

The novel concepts allow more efficient PDCP status reporting. The concepts allow using the advantages of utilizing two different status report formats. Typically, one of them is more resource efficient and thus has less uplink overhead, while another format is more detailed and can enable e.g. selective retransmissions of missing data units, but it uses more UL radio resources.

In one embodiment the UE is configured to do PDCP status reporting periodically, based on two different PDCP status report formats with two different configurable periodicities. It should be appreciated though that more than two formats (and more than two periodicities) may be used, but herein as an example it is assumed that two formats are used.

In one embodiment the first periodicity is a multiple of the other periodicity. This allows for reduced signaling.

A less-frequent reporting may be configured for a detailed PDCP status report format, e.g. the legacy PDCP status report format including FMS and a bitmap.

A more-frequent reporting may be configured for a less-detailed PDCP status report format, e.g. a new format, which may only be based on FMS.

In other words, in one embodiment, two different periodicities may be configured for periodic PDCP status reporting, one period to report FMS and a bitmap, and another period to leave out the bitmap from the report, i.e. only FMS.

In one embodiment the UE would drop the transmission of a format with less information (e.g. FMS only) if a format with more information (e.g. legacy format, i.e. FMS and bitmap) is sent at the same time, e.g. in the same TTI.

In one embodiment two different timers (e.g. called t-*StatusReportTypel and t-StatusReportType2* and as described in more detail further on in the present document) are used in the UE's PDCP implementation to handling the timing of the transmissions of the status reports based on the different formats.

In another embodiment the UE is configured with a timing offset between the starting points of the periodical reporting of the two formats. For example if one timer is already running and started at a time t1, the second timer is started at time t2 = t1 + offset.

In one embodiment the UE restarts the periodic timer upon transmitting a PDCP report which was triggered by eNB polling. In one version of this embodiment the UE would only restart the periodic timer for the type of report which was polled. For example if the eNB has configured the UE to send a periodic report with FMS+bitmap every 100 ms and also configured the UE to send a periodic report with only FMS every 50 ms, and the eNB polls the UE to get a report with FMS+bitmap, then the UE would restart the timer used to determine when to send the report with FMS+bitmap (but not the timer to determine when to send the report with only FMS). Alternatively, the UE may restart all periodic timers when any report is polled, i.e. in the example provided here above, the UE would then restart both the timer used to determine when to send the report with FMS+bitmap and the timer used to determine when to send the report with only FMS.

In the following an example of a configuration information element is given, more specifically a radio resource control (RRC) configuration message, where the novel concept of two independent reporting periodicity parameters is highlighted:

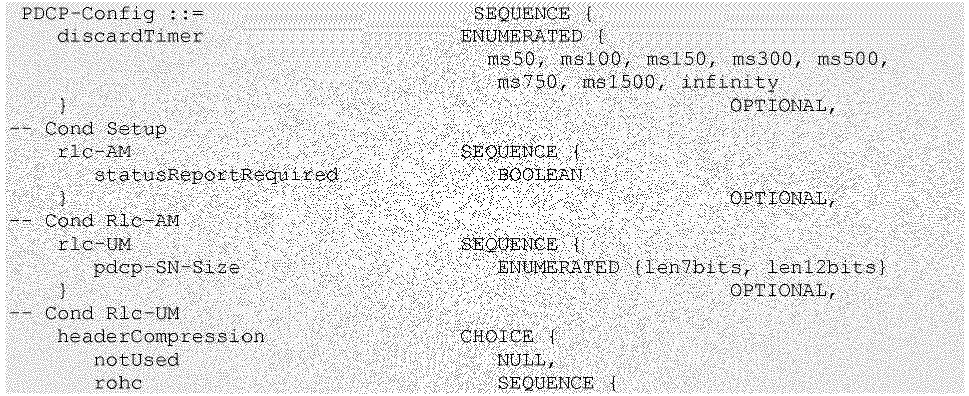

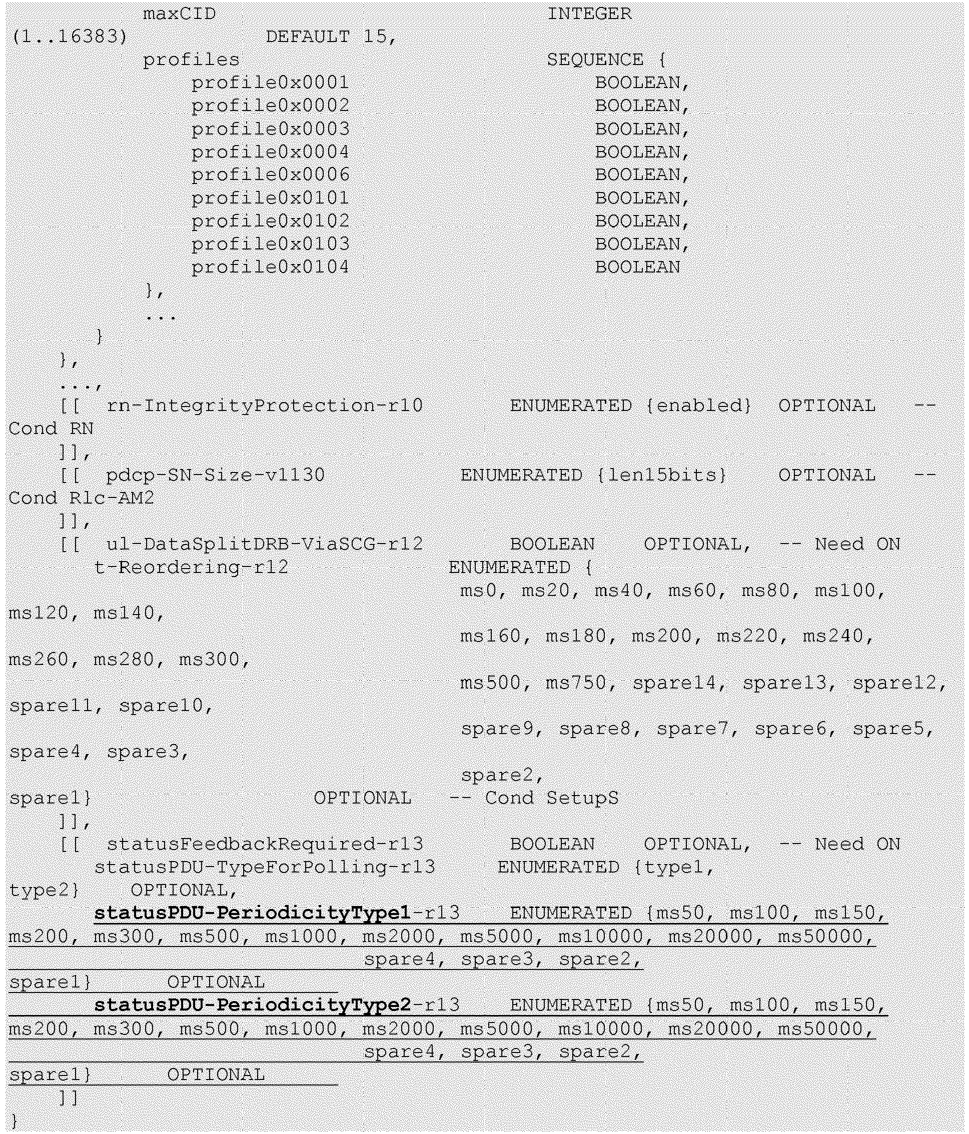

Furthermore, in the following an example of specifying the control in accordance with the two timers is provided, where the LWA status report is an example of a receipt status report:
When *t-StatusReportType1* expires (if configured), the UE shall:
   - if the LWA bearer is configured by upper layers to send a PDCP status report in the uplink (*statusFeedback* [3]) :
   - compile and transmit the PDCP status report of type 1, i.e. legacy PDCP status report, as specified in sub-clause 5.3.1;
   - start *t-StatusReportType1.*
When *t-StatusReportType2* expires (if configured), the UE shall:
   - if the LWA bearer is configured by upper layers to send a PDCP status report in the uplink (*statusFeedback* [3]) :
   - compile and transmit the PDCP status report of type 2, i.e. LWA PDCP status report, as specified in sub-clause 5.x.1;
   - start *t-StatusReportType2.*
When the value of the *t-StatusReportType1* is configured or reconfigured by upper layers, the UE shall:
   - if *t-StatusReportType1* is running:
   - stop and restart *t-StatusReportType1;*
   - if *t-StatusReportType1* is not running:
   - start *t-StatusReportType1;*
When the value of the *t-StatusReportType2* is configured or reconfigured by upper layers, the UE shall:
   - if *t-StatusReportType2* is running:
   - stop and restart *t-StatusReportType2;*
   - if *t-StatusReportType2* is not running:
   - start *t-StatusReportType2;*

### Timer description:

### b) t-StatusReportType1

The duration of the timer is configured by upper layers (*statusPDU-PeriodicityType1* [3]). When configured, this timer is used to trigger status report transmission of type1 for LWA as specified in the subclause 5.x.

### c) t-StatusReportType2

The duration of the timer is configured by upper layers (*statusPDU-PeriodicityType2* [3]). When configured, this timer is used to trigger status report transmission of type2 for LWA as specified in the subclause 5.x.

It may be noted that a timing offset configuration is not included in the previous example.

In the following, an example including a timing offset configuration is given.

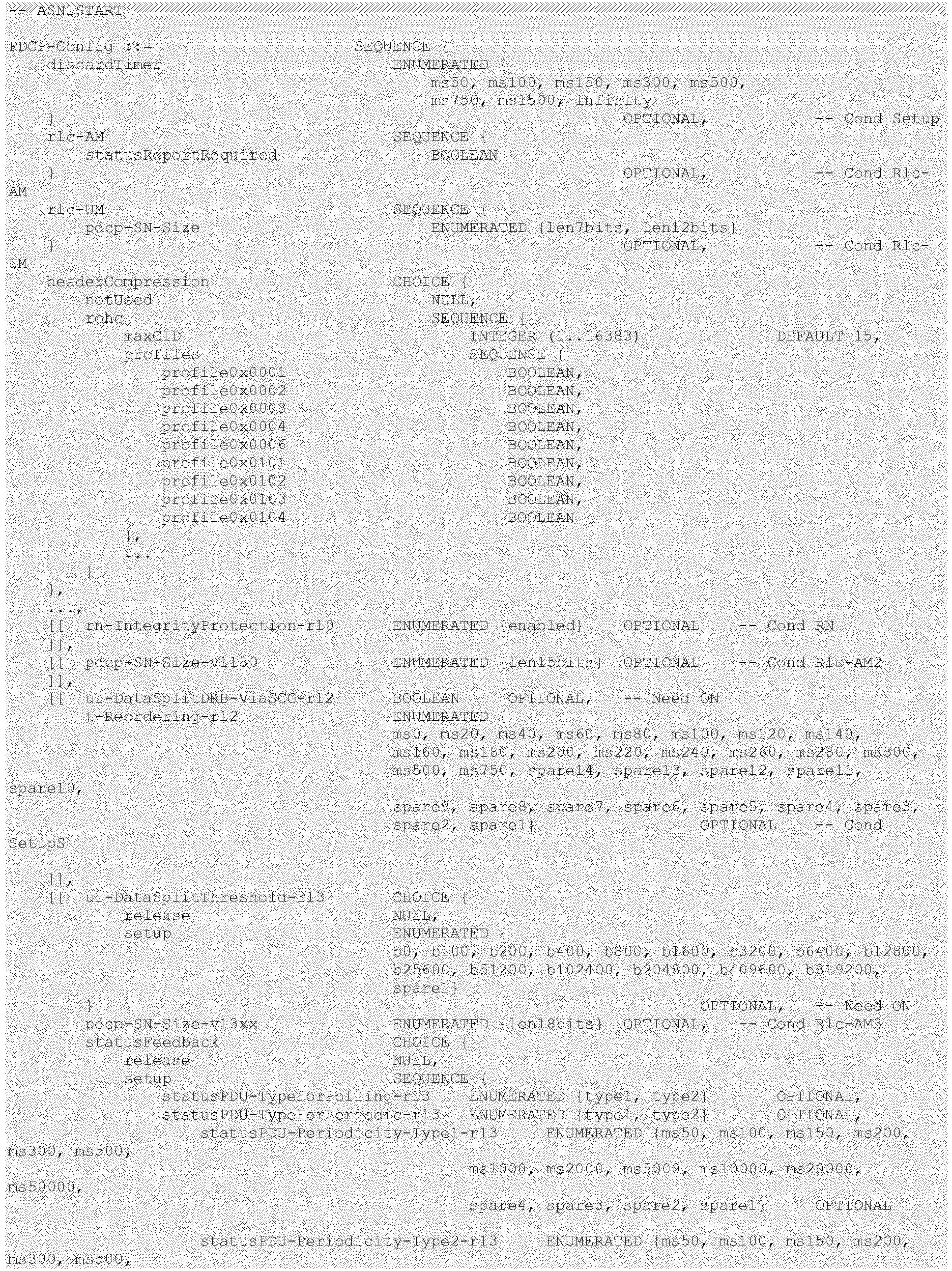

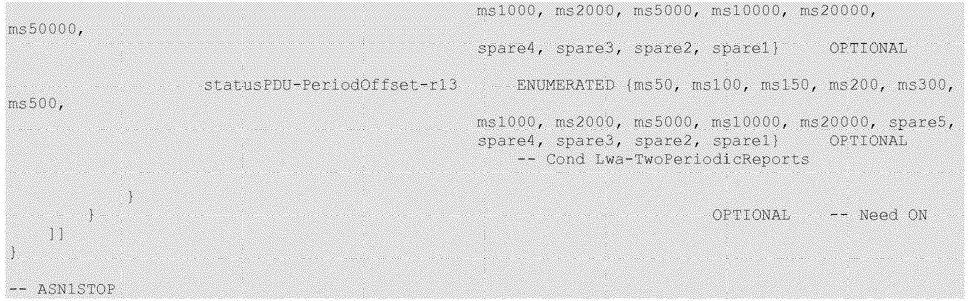

As can be seen, a field "statusPDU-PeriodOffset" has been added to the information element.

The specification of the control for the timers can then be amended as follows:
When the value of the *t-StatusReportType1* or *t-StatusReportType2* is configured or reconfigured by upper layers, the UE shall:
- if *t-StatusReportType1* is running:
   - stop and restart *t-StatusReportType1;*
- if *t-StatusReportType1* is not running:
   - start *t-StatusReportType1;*
- if *t-StatusReportType2* is running:
   - stop and restart *t-StatusReportType2* after the timing offset *statusPDU-PeriodOffset* if configured [3] compared to the start of *t-StatusReportType1;*
- if *t-StatusReportType2* is not running:
   - start *t-StatusReportType2* after the timing offset *statusPDU-PeriodOffset* if configured [3] compared to the start of *t-StatusReportType1;*

## Claims

1. A method of receipt status reporting in a communication device (110), **characterized by**
configuring (S1) said communication device (110) for periodic receipt status reporting by associating a first status report type with a value of a first reporting periodicity parameter and associating a second status report type with a value of a second reporting periodicity parameter, said first status report type being different from said second status report type and said first reporting periodicity parameter being different from said second reporting periodicity parameter, and
periodically (S2) sending receipt status reports of said first type according to said associated value of said first reporting periodicity parameter and receipt status reports of said second type according to said associated value of said second reporting periodicity parameter.

2. The method of claim 1, comprising using (T1) a first timer for controlling the sending of receipt status reports of said first type and a second timer for controlling the sending of receipt status reports of said second type.

3. The method of claim 2, wherein said first timer and said second timer are initially started with a predetermined offset.

4. The method of one of the preceding claims, comprising:
- receiving (U1) a message requesting sending of a receipt status report of said first type,
- sending (U2) a receipt status report of said first type, and
- restarting (U3) said first timer.

5. The method of one of the preceding claims, wherein said first status report type is associated with a first report size and said second status report type is associated with a second report size, said first report size being larger than said second report size.

6. The method of one of the preceding claims, wherein said receipt status reports are status PDUs or control PDUs of the Packet Data Convergence Protocol, wherein the receipt status report of the first type comprises an indication of a first missing PDU, said first missing PDU being the PDU with lowest Sequence Number that is missing, and a bitmap indicating further missing PDUs between the first missing PDU and a received PDU with the highest sequence number.

7. The method of claim 6, wherein the receipt status report of the second type comprises an indication of a first missing PDU, said first missing PDU being the PDU with lowest Sequence Number that is missing.

8. The method of one of the preceding claims, wherein said communication device (100) is furthermore configured for aggregation between a first wireless access technology, LTE-Uu, and a second wireless access technology, WLAN, particularly between a cellular wireless communication technology and a wireless local area network communication technology, WLAN.

9. A method of operating a node (100) of a communication network, **characterized by**
providing (W1, X1) to a communication device (110) of said communication network a configuration information element comprising information for associating a first status report type with a value of a first reporting periodicity parameter and associating a second status report type with a value of a second reporting periodicity parameter, said first status report type being different from said second status report type and said first reporting periodicity parameter being different from said second reporting periodicity parameter.

10. The method of claim 9, furthermore comprising sending (X2) data units to said communication device (110), and receiving (X3) receipt status reports of said first type and receipt status reports of said second type.

11. The method of claim 9, wherein said first status report type is associated with a first report size and said second status report type is associated with a second report size, said first report size being larger than said second report size, and said associated value of said first reporting periodicity parameter being larger than said associated value of said second reporting periodicity parameter.

12. A computer program product comprising program code to be executed by a processor of a communication device (110) to perform a method according to any one of claims 1 to 8.

13. A computer program product comprising program code to be executed by a processor of a communication network node to perform a method according to any one of claims 9 to 11.

14. A communication device (110) arranged for receiving data units and **characterized by** being configurable for periodic receipt status reporting by associating a first status report type with a value of a first reporting periodicity parameter and associating a second status report type with a value of a second reporting periodicity parameter, said first status report type being different from said second status report type and said first reporting periodicity parameter being different from said second reporting periodicity parameter, the communication device (110) furthermore being arranged to periodically send receipt status reports of said first type according to said associated value of said first reporting periodicity parameter and receipt status reports of said second type according to said associated value of said second reporting periodicity parameter.

15. The communication device (110) of claim 14, comprising an interface (111) and a processor (113), where said interface (111) is arranged for receiving data units and sending receipt status reports, and said processor (113) is arranged for controlling the sending of receipt status reports.

16. A node of a communication network, **characterized by** being arranged for providing to a communication device (110) of said communication network a configuration information element comprising information for associating a first status report type with a value of a first reporting periodicity parameter and associating a second status report type with a value of a second reporting periodicity parameter, said first status report type being different from said second status report type and said first reporting periodicity parameter being different from said second reporting periodicity parameter.

17. The node of claim 16, furthermore being arranged for sending data units to said communication device (110), and receiving receipt status reports of said first type and receipt status reports of said second type.

18. The node of claim 16 or 17, comprising an interface (101) and a processor (103), where said interface is arranged for sending data units and receiving receipt status reports, and said processor (103) is arranged for controlling the sending of data units and the processing of information comprised in receipt status reports.

## Patentansprüche

1. Verfahren zur Empfangsstatusberichterstattung in einer Kommunikationsvorrichtung (110), **gekennzeichnet durch** Konfigurieren (S1) der Kommunikationsvorrichtung (110) für periodische Empfangsstatusberichterstattung durch Zuordnen einer ersten Statusberichtsart zu einem Wert eines ersten Berichterstattungsperiodizität-Parameters und Zuordnen einer zweiten Statusberichtsart zu einem Wert eines zweiten Berichterstattungsperiodizität-Parameters, wobei die erste Statusberichtsart von der zweiten Statusberichtsart verschieden ist und der erste Berichterstattungsperiodizität-Parameter von dem zweiten Berichterstattungsperiodizität-Parameter verschieden ist, und periodisches (S2) Senden von Empfangsstatusberichten der ersten Art gemäß dem zugeordneten Wert des ersten Berichterstattungsperiodizität-Parameters und Empfangsstatusberichten der zweiten Art gemäß dem zugeordneten Wert des zweiten Berichterstattungsperiodizität-Parameters.

2. Verfahren nach Anspruch 1, umfassend Verwenden (T1) eines ersten Zeitgebers zum Steuern des Sendens von Empfangsstatusberichten der ersten Art und eines zweiten Zeitgebers zum Steuern des Sendens von Empfangsstatusberichten der zweiten Art.

3. Verfahren nach Anspruch 2, wobei der erste Zeitgeber und der zweite Zeitgeber anfänglich mit einem vorbestimmten Versatz gestartet werden.

4. Verfahren nach einem der vorstehenden Ansprüche, umfassend:
- Empfangen (U1) einer Nachricht, die das Senden eines Empfangsstatusberichts der ersten Art anfordert,
- Senden (U2) eines Empfangsstatusberichts der ersten Art und
- Neustarten (U3) des ersten Zeitgebers.

5. Verfahren nach einem der vorstehenden Ansprüche, wobei die erste Statusberichtsart einer ersten Berichtsgröße zugeordnet ist und die zweite Statusberichtsart einer zweiten Berichtsgröße zugeordnet ist, wobei die erste Berichtsgröße größer als die zweite Berichtsgröße ist.

6. Verfahren nach einem der vorstehenden Ansprüche, wobei die Empfangsstatusberichte Status-PDUs oder Steuer-PDUs des Paketdatenkonvergenzprotokolls sind, wobei der Empfangsstatusbericht der ersten Art eine Angabe einer ersten fehlenden PDU umfasst, wobei die erste fehlende PDU die PDU mit der niedrigsten Sequenznummer ist, die fehlt, und eine Bitmap weitere fehlende PDUs zwischen der ersten fehlenden PDU und einer empfangenen PDU mit der höchsten Sequenznummer angibt.

7. Verfahren nach Anspruch 6, wobei der Empfangsstatusbericht der zweiten Art eine Angabe einer ersten fehlenden PDU umfasst, wobei die erste fehlende PDU die PDU mit der niedrigsten Sequenznummer ist, die fehlt.

8. Verfahren nach einem der vorstehenden Ansprüche, wobei die Kommunikationsvorrichtung (100) ferner zur Aggregation zwischen einer ersten drahtlosen Zugangstechnologie, LTE-Uu, und einer zweiten drahtlosen Zugangstechnologie, WLAN, insbesondere zwischen einer zellularen drahtlosen Kommunikationstechnologie und einer drahtlosen lokalen Netz-Kommunikationstechnologie, WLAN, konfiguriert ist.

9. Verfahren zum Betreiben eines Knotens (100) eines Kommunikationsnetzes, **gekennzeichnet durch**
Bereitstellen (W1, X1) eines Konfigurationsinformationselements an eine Kommunikationsvorrichtung (110) des Kommunikationsnetzes, umfassend Informationen zum Zuordnen einer ersten Statusberichtsart zu einem Wert eines ersten Berichterstattungsperiodizität-Parameters und Zuordnen einer zweiten Statusberichtsart zu einem Wert eines zweiten Berichterstattungsperiodizität-Parameters, wobei die erste Statusberichtsart von der zweiten Statusberichtsart verschieden ist und der erste Berichterstattungsperiodizität-Parameter von dem zweiten Berichterstattungsperiodizität-Parameter verschieden ist.

10. Verfahren nach Anspruch 9, ferner umfassend Senden (X2) von Dateneinheiten an die Kommunikationsvorrichtung (110), und Empfangen (X3) von Empfangsstatusberichten der ersten Art und Empfangsstatusberichten der zweiten Art.

11. Verfahren nach Anspruch 9, wobei die erste Statusberichtsart einer ersten Berichtsgröße zugeordnet ist und die zweite Statusberichtsart einer zweiten Berichtsgröße zugeordnet ist, wobei die erste Berichtsgröße größer als die zweite Berichtsgröße ist, und der zugeordnete Wert des ersten Berichterstattungsperiodizität-Parameters größer als der zugeordnete Wert des zweiten Berichterstattungsperiodizität-Parameters ist.

12. Computerprogrammprodukt, umfassend Programmcode, der von einem Prozessor einer Kommunikationsvorrichtung (110) auszuführen ist, um ein Verfahren nach einem der Ansprüche 1 bis 8 durchzuführen.

13. Computerprogrammprodukt, umfassend Programmcode, der von einem Prozessor eines Kommunikationsnetzknotens auszuführen ist, um ein Verfahren nach einem der Ansprüche 9 bis 11 durchzuführen.

14. Kommunikationsvorrichtung (110), eingerichtet zum Empfangen von Dateneinheiten und **dadurch gekennzeichnet, dass** sie für periodische Empfangsstatusberichterstattung durch Zuordnen einer ersten Statusberichtsart zu einem Wert eines ersten Berichterstattungsperiodizität-Parameters und Zuordnen einer zweiten Statusberichtsart zu einem Wert eines zweiten Berichterstattungsperiodizität-Parameters konfigurierbar ist, wobei die erste Statusberichtsart von der zweiten Statusberichtsart verschieden ist und der erste Berichterstattungsperiodizität-Parameter von dem zweiten Berichterstattungsperiodizität-Parameter verschieden ist, wobei die Kommunikationsvorrichtung (110) ferner eingerichtet ist, um periodisch Empfangsstatusberichte der ersten Art gemäß dem zugeordneten Wert des ersten Berichterstattungsperiodizität-Parameters und Empfangsstatusberichte der zweiten Art gemäß dem zugeordneten Wert des zweiten Berichterstattungsperiodizität-Parameters zu senden.

15. Kommunikationsvorrichtung (110) nach Anspruch 14, umfassend eine Schnittstelle (111) und einen Prozessor (113), wobei die Schnittstelle (111) zum Empfangen von Dateneinheiten und Senden von Empfangsstatusberichten eingerichtet ist, und der Prozessor (113) zum Steuern des Sendens von Empfangsstatusberichten eingerichtet ist.

16. Knoten eines Kommunikationsnetzes, **dadurch gekennzeichnet, dass** er zum Bereitstellen eines Konfigurationsinformationselements an eine Kommunikationsvorrichtung (110) des Kommunikationsnetzes eingerichtet ist, umfassend Informationen zum Zuordnen einer ersten Statusberichtsart zu einem Wert eines ersten Berichterstattungsperiodizität-Parameters und Zuordnen einer zweiten Statusberichtsart zu einem Wert eines zweiten Berichterstattungsperiodizität-Parameters, wobei die erste Statusberichtsart von der zweiten Statusberichtsart verschieden ist und der erste Berichterstattungsperiodizität-Parameter von dem zweiten Berichterstattungsperiodizität-Parameter verschieden ist.

17. Knoten nach Anspruch 16, der ferner zum Senden von Dateneinheiten an die Kommunikationsvorrichtung (110), und Empfangen von Empfangsstatusberichten der ersten Art und Empfangsstatusberichten der zweiten Art eingerichtet ist.

18. Knoten nach Anspruch 16 oder 17, umfassend eine Schnittstelle (101) und einen Prozessor (103), wobei die Schnittstelle zum Senden von Dateneinheiten und zum Empfangen von Empfangsstatusberichten eingerichtet ist, und der Prozessor (103) zum Steuern des Sendens von Dateneinheiten und der Verarbeitung von Informationen, die in Empfangsstatusberichten umfasst sind, eingerichtet ist.

## Revendications

1. Procédé d'établissement de rapport d'état de réception dans un dispositif de communication (110), **caractérisé par** la configuration (S1) dudit dispositif de communication (110) pour établir un rapport d'état de réception périodique en associant un premier type de rapport d'état à une valeur d'un premier paramètre de périodicité d'établissement de rapport et l'association d'un deuxième type de rapport d'état à une valeur d'un deuxième paramètre de périodicité d'établissement de rapport, ledit premier type de rapport d'état étant différent dudit deuxième type de rapport d'état et ledit premier paramètre de périodicité d'établissement de rapport étant différent dudit deuxième paramètre de périodicité d'établissement de rapport, et l'envoi périodique (S2) des rapports d'état de réception dudit premier type selon ladite valeur associée dudit premier paramètre de périodicité d'établissement de rapport et de rapports d'état de réception dudit deuxième type selon ladite valeur associée dudit deuxième paramètre de périodicité d'établissement de rapport.

2. Procédé selon la revendication 1, comprenant l'utilisation (T1) d'un premier temporisateur pour commander l'envoi de rapports d'état de réception dudit premier type et d'un deuxième temporisateur pour commander l'envoi de rapports d'état de réception dudit deuxième type.

3. Procédé selon la revendication 2, dans lequel ledit premier temporisateur et ledit deuxième temporisateur sont initialement démarrés avec un décalage prédéterminé.

4. Procédé selon l'une des revendications précédentes, comprenant :
- la réception (U1) d'un message demandant l'envoi d'un rapport d'état de réception dudit premier type,
- l'envoi (U2) d'un rapport d'état de réception dudit premier type, et
- le redémarrage (U3) dudit premier temporisateur.

5. Procédé selon l'une des revendications précédentes, dans lequel ledit premier type de rapport d'état est associé à une première taille de rapport et ledit deuxième type de rapport d'état est associé à une deuxième taille de rapport, ladite première taille de rapport étant plus grande que ladite deuxième taille de rapport.

6. Procédé selon l'une des revendications précédentes, dans lequel lesdits rapports d'état de réception sont des PDU d'état ou des PDU de commande du protocole de convergence de données de paquet, dans lequel le rapport d'état de réception du premier type comprend une indication d'une première PDU manquante, ladite première PDU manquante étant la PDU avec le numéro de séquence le plus bas qui est manquante, et une table de bits indiquant d'autres PDU manquantes entre la première PDU manquante et une PDU reçue avec le numéro de séquence le plus élevé.

7. Procédé selon la revendication 6, dans lequel le rapport d'état de réception du deuxième type comprend une indication d'une première PDU manquante, ladite première PDU manquante étant la PDU avec le numéro de séquence le plus bas qui est manquante.

8. Procédé selon l'une des revendications précédentes, dans lequel ledit dispositif de communication (100) est de plus configuré pour une agrégation entre une première technologie d'accès sans fil, LTE-Uu,
et une deuxième technologie d'accès sans fil, WLAN, en particulier entre une technologie de communication sans fil cellulaire et une technologie de communication par réseau local sans fil, WLAN.

9. Procédé de fonctionnement d'un nœud (100) d'un réseau de communication, **caractérisé par**
la fourniture (W1, X1) à un dispositif de communication (110) dudit réseau de communication d'un élément d'informations de configuration comprenant des informations pour associer un premier type de rapport d'état à une valeur d'un premier paramètre de périodicité d'établissement de rapport et associer un deuxième type de rapport d'état à une valeur d'un deuxième paramètre de périodicité d'établissement de rapport, ledit premier type de rapport d'état étant différent dudit deuxième type de rapport d'état et ledit premier paramètre de périodicité d'établissement de rapport étant différent dudit deuxième paramètre de périodicité d'établissement de rapport.

10. Procédé selon la revendication 9, comprenant de plus l'envoi (X2) d'unités de données audit dispositif de communication (110), et la réception (X3) de rapports d'état de réception dudit premier type et de rapports d'état de réception dudit deuxième type.

11. Procédé selon la revendication 9, dans lequel ledit premier type de rapport d'état est associé à une première taille de rapport et ledit deuxième type de rapport d'état est associé à une deuxième taille de rapport, ladite première taille de rapport étant plus grande que ladite deuxième taille de rapport, et ladite valeur associée dudit premier paramètre de périodicité d'établissement de rapport étant plus grande que ladite valeur associée dudit deuxième paramètre de périodicité d'établissement de rapport.

12. Produit programme informatique comprenant un code de programme à exécuter par un processeur d'un dispositif de communication (110) pour mettre en œuvre un procédé selon l'une quelconque des revendications 1 à 8.

13. Produit programme informatique comprenant un code de programme à exécuter par un processeur d'un nœud de réseau de communication pour mettre en œuvre un procédé selon l'une quelconque des revendications 9 à 11.

14. Dispositif de communication (110) agencé pour recevoir des unités de données et **caractérisé en ce qu'**il est configurable pour établir un rapport d'état de réception périodique en associant un premier type de rapport d'état à une valeur d'un premier paramètre de périodicité d'établissement de rapport et en associant un deuxième type de rapport d'état à une valeur d'un deuxième paramètre de périodicité d'établissement de rapport, ledit premier type de rapport d'état étant différent dudit deuxième type de rapport d'état et ledit premier paramètre de périodicité d'établissement de rapport étant différent dudit deuxième paramètre de périodicité d'établissement de rapport, le dispositif de communication (110) étant de plus agencé pour envoyer périodiquement des rapports d'état de réception dudit premier type selon ladite valeur associée dudit premier paramètre de périodicité d'établissement de rapport et des rapports d'état de réception dudit deuxième type selon ladite valeur associée dudit deuxième paramètre de périodicité d'établissement de rapport.

15. Dispositif de communication (110) selon la revendication 14, comprenant une interface (111) et un processeur (113), où ladite interface (111) est agencée pour recevoir des unités de données et envoyer des rapports d'état de réception, et ledit processeur (113) est agencé pour commander l'envoi des rapports d'état de réception.

16. Nœud d'un réseau de communication, **caractérisé en ce qu'**il est agencé pour fournir à un dispositif de communication (110) dudit réseau de communication un élément d'informations de configuration comprenant des informations pour associer un premier type de rapport d'état à une valeur d'un premier paramètre de périodicité d'établissement de rapport et associer un deuxième type de rapport d'état à une valeur d'un deuxième paramètre de périodicité d'établissement de rapport, ledit premier type de rapport d'état étant différent dudit deuxième type de rapport d'état et ledit premier paramètre de périodicité d'établissement de rapport étant différent dudit deuxième paramètre de périodicité d'établissement de rapport.

17. Nœud selon la revendication 16, étant de plus agencé pour l'envoi d'unités de données audit dispositif de communication (110), et la réception de rapports d'état de réception dudit premier type et de rapports d'état de réception dudit deuxième type.

18. Nœud selon la revendication 16 ou 17, comprenant une interface (101) et un processeur (103), où ladite interface est agencée pour envoyer des unités de données et recevoir des rapports d'état de réception, et ledit processeur (103) est agencé pour commander l'envoi d'unités de données et le traitement des informations comprises dans les rapports d'état de réception.
